# EUROPEAN PATENT APPLICATION

(11) **EP 3 575 054 A1**
(43) Date of publication of application: **04.12.2019**
(21) Application number: 18382382.2
(22) Date of filing: 01.06.2018
(51) Int. Cl.: B28B 1/00, B01F 15/02, B28C 5/12, B28C 5/40, B33Y 30/00, B29C 64/00

(54) **APPARATUS AND METHOD FOR 3D PRINTING OBJECTS OR STRUCTURES OF CEMENTITIOUS MATERIAL**

(71) Applicant: Fundación Tecnalia Research & Innovation, 20009 Donostia-San Sebastian, Guipuzcoa (ES)
(72) Inventor: ARAMBURU IBARLUCEA, Amaia, 20009 San Sebastián - Guipúzcoa (ES); CALDERON URISZAR-ALDACA, Iñigo, 20009 San Sebastián - Guipúzcoa (ES); CHICA PAEZ, Jose Antonio, 20009 San Sebastián - Guipúzcoa (ES)
(74) Representative: Balder IP Law, S.L.

(57) **Abstract**

An apparatus comprising: a vessel (15) adapted to contain cementitious material, the vessel (15) at least comprising first, second and third openings (41-43), the third opening (43) being unobstructed; a first conduit (5) coupled to the first opening (41) of the vessel (5); a first pump (4) adapted to deliver cementitious material to the vessel (15) from a first barrel (1), the first pump (4) being coupled to the first conduit (5) and comprising the first barrel (1); a nozzle (26) adapted to deposit cementitious material; a second pump (17) adapted to deliver cementitious material to the nozzle (26) from a second barrel (19), the second pump (17) comprising the second barrel (19), and the second barrel (19) being coupled to the second opening (42) of the vessel (15); and a second conduit (32) coupled to one of the vessel (15) and the first conduit (5), the second conduit (32) being adapted to deliver at least one of: a fiber reinforcement for cementitious material, a rheology modifier for cementitious material, a hardening accelerant for cementitious material, and a hardening retardant for cementitious material.

## Description

### TECHNICAL FIELD

The present invention relates to the field of 3D printing. More specifically, the present invention relates to an apparatus and a method for printing objects or structures with cementitious material.

### STATE OF THE ART

3D printing is becoming increasingly popular for rapid prototyping and additive manufacturing of objects and structures. In the last few years, improvements have been made to the technology involved in said manufacturing techniques, mainly the technology for manufacturing objects and structures using plaster or resins as the manufacturing material.

Fewer developments have occurred in the prior art when the material that is to be 3D printed is of a cementitious nature. The use of cementitious materials may enable cost-effective production of objects and structures that require greater strength, among other mechanical properties, than objects and structures made of plaster or resins.

Patent document EP-2773492-B1 describes an apparatus for delivery of cementitious material. The cementitious material is received at a hopper and delivered to a printing head by means of a pump. The printing head comprises a piston and an extruding mechanism for depositing the cementitious material via a nozzle. The apparatus, however, is not provided with any mechanism that makes possible to extract air bubbles from the cementitious material. Further, any additive that needs be added to the cementitious material must be included in the same when provided to the hopper, otherwise the additive is not homogenously mixed with the cementitious material. In addition, each of the piston, the pump and the extruding mechanism introduce a pulsing pressure that the nozzle is subject to, thereby resulting in a non-uniform lead geometry of the deposited material that may result in an undesirable variation of its section in both width and thickness upon printing.

Patent document CN-205167577-U discloses an apparatus for printing of viscous fluid materials. The apparatus receives the material at a hopper, which is then transported to a printing head using a feed screw mechanism similar to a worm pump. At the printing head, an extruding mechanism is used for depositing the material. The problems related to the impossibility of removing air bubbles and adding additives described above with reference to the first patent document cited may also be identified in this apparatus. Further, the apparatus includes means for detecting pressure in the conduit for transporting the material from the hopper to the printing head; the detected pressure is received at a control unit that coordinates the motors of both the feed screw mechanism and the extruding mechanism for deposition of the material. Cementitious materials generally include sand, arid materials and aggregates that tend to form crusts inside conduits, thereby reducing the section thereof. The operation of the apparatus is negatively influenced by this problem, which furthermore occurs more noticeably in parts of the conduits where the flow moves at lower speeds such as loops, curves, etc.

There is an interest in providing apparatuses and methods for 3D printing objects and/or structures made of cementitious materials, and which do not have the aforementioned problems.

### DESCRIPTION OF THE INVENTION

A first aspect of the present invention relates to an apparatus comprising:
a vessel adapted to contain cementitious material, the vessel at least comprising first, second and third openings, the third opening being unobstructed;
a first conduit coupled to the first opening of the vessel;
a first pump adapted to deliver cementitious material to the vessel from a first barrel, the first pump being coupled to the first conduit and comprising the first barrel;
a nozzle adapted to deposit cementitious material;
a second pump adapted to deliver cementitious material to the nozzle from a second barrel, the second pump comprising the second barrel, and the second barrel being coupled to the second opening of the vessel; and
a second conduit coupled to either the vessel or the first conduit, the second conduit being adapted to deliver at least one of: a fiber reinforcement for cementitious material, a rheology modifier for cementitious material, a hardening accelerant for cementitious material, and a hardening retardant for cementitious material.

The apparatus makes possible to print 3D objects and/or structures of cementitious material (e.g. concrete, microconcrete, cement, paste, mortar, etc.).

The first pump pumps the cementitious material provided in the first barrel (the barrel may be the stator of the first pump or a passive inner conduit of the first pump) to the first conduit, and from the first conduit to the vessel. The vessel receives the cementitious material and any other material provided through the second conduit. The material provided through the second conduit may be supplied to the vessel or the first conduit (such that it is mixed with the cementitious material), which in turn is provided to the vessel owing to the pumping of the first pump. The material contained in the vessel, which is the cementitious material and any material or substance(s) provided through the second conduit, is provided to the second barrel (the barrel may be the stator of the second pump or a conduit of the second pump). The second pump pumps the material in the barrel thereof (i.e. the second barrel) to the nozzle through a third conduit coupled to both the second barrel and the nozzle. Owing to the pumping of the second pump, any material present within the cementitious material that has been provided through the second conduit, is mixed with the cementitious material thereby homogenizing the mixture (of such material and the cementitious material).

The material that may be delivered to the vessel in order to provide such mixture may be: a fiber reinforcement that may be used for modifying the mechanical properties of the cementitious material; a rheology modifier for cementitious material; an accelerant that speeds up the hardening of the cementitious material; and/or a retardant that slows down the hardening of the cementitious material.

The delivery of such substance/s to the cementitious material after pumping the same towards the vessel, with the first pump, makes unnecessary to provide, to the first pump, the cementitious material already mixed with said substance/s. This is advantageous because, as the mixing takes place closer to the nozzle and above a printing surface or printing plane level, the material may undergo fewer rheological changes and the reinforcement fibers are less prone to formation of balls while there is still space to aid mixing by means of a screw like mixer, thus greater homogeneity in the material to be deposited is attained. Furthermore, in the apparatus of the present disclosure the cementitious material is mixed more smoothly with any substance (e.g. fiber reinforcement, rheology modifier, accelerant, retardant) than in prior art apparatuses, where the cementitious material is mixed with the substance in the hopper, or in the nozzle, for instance. When the mixing is not smooth, air bubbles may be produced within the cementitious material, or balls with the fiber reinforcement may be produced within the cementitious material, or the hardening becomes irregular, all of which negatively influence the mechanical properties of the deposited cementitious material (once hardened, the air bubbles become air voids that affect the structural integrity of the printed object or structure, and are the starting point for crack propagation due to thermal expansion, shrinkage or mechanical stress).

The third opening, which is free from obstruction, makes possible to remove any air bubbles that may be within the cementitious material contained in the vessel or in the barrel of the second pump. As the air bubbles go upwards due to the lower density (with respect to the density of the cementitious material), they leave the cementitious material through the third opening. Further, the third opening makes possible to remove any excess pressure resulting from the pumping of the first pump; the pumping generally increases the pressure within the vessel, but such pressure increase does not affect the apparatus of the present disclosure thanks to the third opening.

Owing to the configuration of the apparatus, particularly the vessel, the second pump and the nozzle, the deposition of cementitious material may be continuous if desired since no plunger or piston are used for delivering the material to the deposition nozzle. The use of a plunger or a piston in prior art apparatuses entails times in which no material is delivered to the nozzle so that the vessel could be refilled with fresh cementitious material (while pulling the plunger or the piston), thereby stopping the deposition for some time until the vessel was loaded with cementitious material again.

In some embodiments, the second opening is at a first end of the vessel and the third opening is at a second end of the vessel, the first end being opposite to the second end.

The provision of the second and the third openings on opposite ends of the vessel improves the release of air bubbles present in the material within the vessel and/or the barrel of the second pump. If there are any air bubbles in the cementitious material within the barrel of the second pump, the bubbles first go to the vessel through the second opening (where the second pump is coupled to the vessel), and then go to the third opening thereby being released.

In some embodiments, a lengthwise dimension of the vessel has an angle greater than 45º and less than 135º with respect to a horizontal. In some of these embodiments, the angle is greater than 60º and less than 120º with respect to a horizontal. In some of these embodiments, the angle is greater than 75º and less than 105º with respect to a horizontal.

The vessel is preferably upright, i.e. vertical. In such arrangement, the first end is at the bottom of the vessel and the second end is at the top of the vessel, thus the second opening is at the bottom and the third opening is at the top. Such arrangement of the second and third openings eases the release of air bubbles, which tend to go upwards due to the much lower density thereof (with respect to the density of cementitious materials).

In some embodiments, the apparatus further comprises a sensing device configured to sense an amount of material within the vessel, the sensing device being adjacent to the third opening of the vessel.

The sensing device may provide measurements related to an amount of material within the vessel to a unit that operates the apparatus. The unit may be, for instance but without limitation, a microcontroller, a computer, an FPGA, etc. programmed to control the apparatus.

When the measurements of the sensing device are indicative of a low amount of material according to an established threshold (e.g. a first threshold), the unit may operate the first pump so that it pumps cementitious material in order to fill or refill the vessel. When the measurements of the sensing device are indicative of a great amount of material according to an established threshold (e.g. a second threshold), the unit may operate the first pump so that it stops pumping cementitious material in order to avoid overfilling the vessel. The first and the second thresholds may be programmed into the unit and be adjustable.

The second pump may pump cementitious material of the vessel irrespective of whether the first pump is active or not, thus the deposition of cementitious material may occur both while the vessel is being refilled and not refilled. In this sense, the vessel is preferably refilled when the amount of material therein is low but there is some material left in the vessel that may be deposited while refilling takes place.

The sensing device is provided outside of the vessel so that it does not get dirty due to, for example, the cementitious material delivered to the vessel as it is pumped with the first pump. Any dirt in the sensing device could affect the precision of the measurements it makes.

In some embodiments, the sensing device comprises an ultrasonic sensor configured to provide sound waves towards an interior of the vessel through the third opening.

The ultrasonic sensor may make the measurements without these being affected by inner wall interruptions, which could occur due to the refraction of fresh cementitious material in the vessel. The refraction of the cementitious material depends on the dosage thereof and may result in inaccuracies in the sensing. In some examples, the ultrasonic sensor provides narrowband ultrasound signals that are more robust against this phenomenon.

In some embodiments, the first pump is a peristaltic pump or a worm pump.

The peristaltic pump comprises a tube or a conduit circumscribed by the barrel (i.e. the first barrel) in which the cementitious material is provided and from which it is pumped towards the vessel (by means of the rotor of the pump that presses against the tube or the conduit, which is passively constrained by the barrel).

The worm pump pumps the cementitious material that is provided in the stator thereof (i.e. the first barrel) as the rotor thereof turns thereby displacing each cavity formed between the stator and the rotor.

Both the peristaltic pump and the worm pump progressively deliver the cementitious material from the barrel thereof to the vessel through the first conduit of the apparatus.

In some embodiments, the second pump is a worm pump or an endless screw based pump.

The cementitious material in the vessel may be provided to the cavities formed between the stator (i.e. the second barrel) and the rotor of the worm pump so that it is pumped towards the nozzle for deposition thereof.

In some embodiments, a lengthwise dimension of the second barrel has an angle greater than 60º and less than 150º with respect to a lengthwise dimension of the vessel. In some of these embodiments, the angle is greater than 75º and less than 120°. In some of these embodiments, the angle is greater than 80º and less than 100°. The angle is preferably measured from a lower-most portion of the second barrel, that is, a portion of the second barrel comprising a discharging opening.

The barrel and the vessel may be arranged substantially perpendicularly so that if the vessel is arranged upright (i.e. vertical), the cementitious material in the vessel may fall and be provided to the barrel of the second pump due to the effect of gravity.

In some embodiments, the apparatus further comprises first and second supporting legs coupled to the second pump, a length of the first supporting leg being shorter than a length of the second supporting leg. In these embodiments, the second barrel is coupled to the first and the second supporting legs such that a lengthwise dimension of the second barrel has an angle greater than 0º and less than 90º with respect to a horizontal, preferably greater than 15º, and/or 30º, and preferably less than 75º and/or 60º with respect to the horizontal.

The discharging opening of the second pump is at a lower height than a charging opening of the second pump (i.e. the charging opening is coupled to the second opening of the vessel) owing to the angle of the barrel (with respect to the horizontal) resulting from the supporting legs. Accordingly, any air bubbles that may be present in the cementitious material within the barrel of the second pump may move towards the charging opening (at a higher height than the discharging opening) for release of the same.

In some embodiments, the first and the second supporting legs are dimensioned such that a pumping of the second pump makes the first and the second supporting legs vibrate.

The vibration of the supporting legs is transmitted to the barrel of the second pump owing to the coupling thereto. The vibration of the barrel eases the release of the air bubbles as the vibrating motion moves air bubbles that may be stuck within the barrel.

In some embodiments, the apparatus further comprises a hopper; the hopper comprises first and second openings, the first opening of the hopper being adapted to receive cementitious material; and the first pump is further adapted to suction cementitious material into the first barrel from the second opening of the hopper.

The hopper may be coupled to the first barrel through a feeding conduit. The cementitious material is provided in the hopper from the first opening thereof, keeping it ever filled during printing process and with fresh material level far above the second opening thereof, from which it may be suctioned by the first pump so that once it is within the first barrel, it may be pumped towards the vessel. The suction causes a depression in fresh material, depending on its rheology, but the depressed free surface of the fresh material has to be kept above the level of the second opening of the hopper, thus impeding the entrance of air that could occur if the depression reached that level, but also enabling a first eviction of any air bubbles that could be within the cementitious material provided from the first opening or that could be trapped when it falls in the hopper.

Forcing the entry of cementitious material into the first barrel by means of suction, while ensuring the entrance of only fresh material and with a first bubble eviction in the hopper, rather than with the effect of gravity over a screw or worm-like pump for instance, fewer air bubbles may be present in the cementitious material once it reaches the first barrel.

In some embodiments, the apparatus further comprises a blocking device configured to switch between a first position and a second position; in the first position, the blocking device blocks a deposition opening of the nozzle; and, in the second position, the blocking device does not block the deposition opening of the nozzle.

The blocking device may be a component shaped according to a shape of the nozzle so that it may block the deposition effected through the nozzle. The component may be metallic, for instance. The component may be pivotably, rotatably or slidably coupled to a printing head comprising the nozzle. By pivoting, rotating or sliding the blocking device, the same may switch between the first and the second positions to block and unblock the deposition opening of the nozzle.

A unit controlling the operation of the apparatus may switch the blocking device between the first position and the second position depending upon what is being printed. To this end, the blocking device is switchable between the first and the second positions by means of one or more actuators (e.g. hydraulic, pneumatic, electric, etc.) that may move the blocking device and which are operable by the unit.

For instance, after printing a first part or a first portion of an object with the apparatus, a second part or a second portion of the object that is remote from the first part or the first portion may need be printed with the apparatus. The blocking device may stop the deposition of cementitious material through the nozzle by blocking it (i.e. switching the blocking device from the second position to the first position) until the nozzle is positioned at the position where the second part or the second portion is to be printed, and then unblock the nozzle (i.e. switching the blocking device from the first position to the second position). Besides, if the printing process needed to be stopped in order to put in place some reinforcement such as rebars, correct some printing mistakes in geometry, shape or material, or to smoothen the aspect before hardening, the blocking device may stop the deposition of cementitious material thereby enabling such operations.

In some embodiments, the apparatus further comprises a third conduit, a printing head, and a moveable device; the printing head comprises the nozzle and is coupled to the moveable device; the third conduit is coupled to both the second barrel and the printing head; and the moveable device comprises a robotic arm or a gantry crane like a cartesian robot or a cable driven robot.

The cementitious material to be printed with the apparatus is transferred from the second pump to the printing head and, thus, to the nozzle through the third conduit. The printing head is coupled to the moveable device of the apparatus so that the deposition may be effected in different positions upon moving the moveable device.

In some embodiments, the apparatus further comprises a unit programmed to operate the first pump and the second pump. In some embodiments, the unit is further programmed to operate the nozzle. In some embodiments, the unit is further programmed to operate the moveable device. In some embodiments, the unit is further programmed to operate the sensing device. In some embodiments, the unit is further programmed to operate the blocking device.

A second aspect of the present invention relates to a method comprising:
pumping, with a first pump, a cementitious material to a vessel from a first barrel through a first conduit, the vessel being adapted to contain cementitious material and at least comprising first, second and third openings, the third opening being unobstructed, the first conduit being coupled to both the first opening of the vessel and the first pump, and the first pump comprising the first barrel;
providing the cementitious material within the vessel to a second barrel, a second pump comprising the second barrel, and the second barrel being coupled to the second opening of the vessel;
providing, from a second conduit to one of the vessel and the first conduit, at least one of: a fiber reinforcement for cementitious material, a rheology modifier for cementitious material, a hardening accelerant for cementitious material, and a hardening retardant for cementitious material;
pumping, with the second pump, the cementitious material from the second barrel to a nozzle; and
depositing the cementitious material of the vessel with the nozzle.

With a method according to the present disclosure, it is possible to print an object and/or a structure by depositing cementitious material through the nozzle.

The cementitious material is delivered to the vessel from which the material will be deposited for printing the object and/or the structure. To this end, cementitious material that is provided to the first pump is pumped therefrom to the first conduit, and from the first conduit to the vessel.

A substance(s) or material may be added to the cementitious material of the vessel in order to modify the mechanical properties of the printed object and/or structure with the addition of fiber reinforcements and/or a rheology modifier, and/or modify the time it takes the cementitious material to harden with the addition of hardening accelerant(s) or retardant(s). This substance(s) or material is added, through the second conduit, to either the vessel or the pumped cementitious material in the first conduit.

As the cementitious material in the vessel is pumped (with the second pump) towards the nozzle for the deposition of the same, the cementitious material and the substance(s) or material provided through the second conduit are mixed as they are pumped. Accordingly, the cementitious material delivered to the nozzle is a homogeneous mixture that, furthermore, has not been prepared in advance. Providing the cementitious material to the first pump already mixed with fiber reinforcements, rheology modifiers, hardening accelerants or retardants may result in a more complex method that, moreover, may lead to poorer printing of cementitious material (owing to the rheological changes the same may undergo up to its deposition).

The use of an open vessel makes possible to deposit cementitious material continuously because no plunger or piston needs be used to refill the vessel and/or deliver the cementitious material to the nozzle. When a plunger or a piston is used, the same must be pushed for delivering the cementitious material to the nozzle, and pulled for receiving fresh cementitious material in the vessel (during which cementitious material is not delivered to the nozzle).

In some embodiments, the second opening is at a first end of the vessel and the third opening is at a second end of the vessel, the first end being opposite to the second end.

In some embodiments, the method further comprises arranging the vessel such that a lengthwise dimension thereof has an angle greater than 45º and less than 135º with respect to a horizontal. In some of these embodiments, the angle is greater than 60º and less than 120º with respect to a horizontal. In some of these embodiments, the angle is greater than 75º and less than 105º with respect to a horizontal.

In some embodiments, the method further comprises sensing, with a sensing device, an amount of material within the vessel through the third opening. In these embodiments, the step of pumping, with the first pump, the cementitious material to the vessel through the first conduit comprises: pumping, with the first pump when a sensed amount of material within the vessel is less than a first threshold, the cementitious material to the vessel from the first barrel through the first conduit; and stopping the pumping with the first pump when the sensed amount of material within the vessel is equal to or greater than a second threshold.

Filling or refilling the vessel may be carried out when the amount of material present therein is low (based on the first threshold) according to the measurements of the sensing device, and such filling or refilling may be stopped when the amount is high (based on the second threshold).

In some embodiments, the sensing device comprises an ultrasonic sensor configured to provide sound waves towards an interior of the vessel through the third opening.

In some embodiments, the first pump is a peristaltic pump or a worm pump.

In some embodiments, the second pump is a worm pump or an endless screw based pump (that mixes and pumps simultaneously).

In some embodiments, the method further comprises arranging the second barrel such that a lengthwise dimension thereof has an angle greater than 0º and less than 90º with respect to a horizontal, preferably greater than 15º, and/or 30º, and preferably less than 75º and/or 60º with respect to the horizontal.

In some embodiments, a discharging opening of the second pump is at a lower height than a charging opening of the second pump.

In some embodiments, the method further comprises arranging the second barrel such that a lengthwise dimension thereof has an angle greater than 60º and less than 150º with respect to a lengthwise dimension of the vessel. In some of these embodiments, the angle is greater than 75º and less than 120º. In some of these embodiments, the angle is greater than 80º and less than 100º. The angle is preferably measured from a lower-most portion of the second barrel, that is, a portion of the second barrel comprising a discharging opening.

In some embodiments, the method further comprises blocking the nozzle thereby stopping deposition of the cementitious material.

The blocking may be carried out with a blocking device configured to switch between a first position and a second position. In the first position, the blocking device blocks a deposition opening of the nozzle whereas, in the second position, the blocking device does not block the deposition opening of the nozzle.

In some embodiments, the method further comprises: when the nozzle is blocked, awaiting hardening of deposited cementitious material or displacing the nozzle to a first location different from a second location where cementitious material has been deposited with the nozzle; and unblocking the nozzle thereby further depositing the cementitious material.

In some embodiments, the method further comprises moving a moveable device. In these embodiments, a printing head comprises the nozzle and is coupled to the moveable device; a third conduit is coupled to both the second barrel and the printing head; and the moveable device comprises a robotic arm or a gantry crane like a cartesian robot or a cable driven robot.

In some embodiments, the method further comprises suctioning, with the first pump, the cementitious material into the first barrel from a hopper.

In some embodiments, the method further comprises providing the cementitious material into the hopper.

In some embodiments, the cementitious material comprises one of: concrete, microconcrete, cement, paste and mortar.

Similar advantages as those described for the first aspect of the invention may also be applicable to the second aspect of the invention.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out. The drawings comprise the following figures:
Figures 1A-1B show an apparatus according to an embodiment of the invention.
Figures 2A-2B, 3 and 4 show different parts of the apparatus of Figures 1A-1B.
Figure 5 shows, in a block diagram form, a method according to an embodiment of the invention.

### DESCRIPTION OF A WAY OF CARRYING OUT THE INVENTION

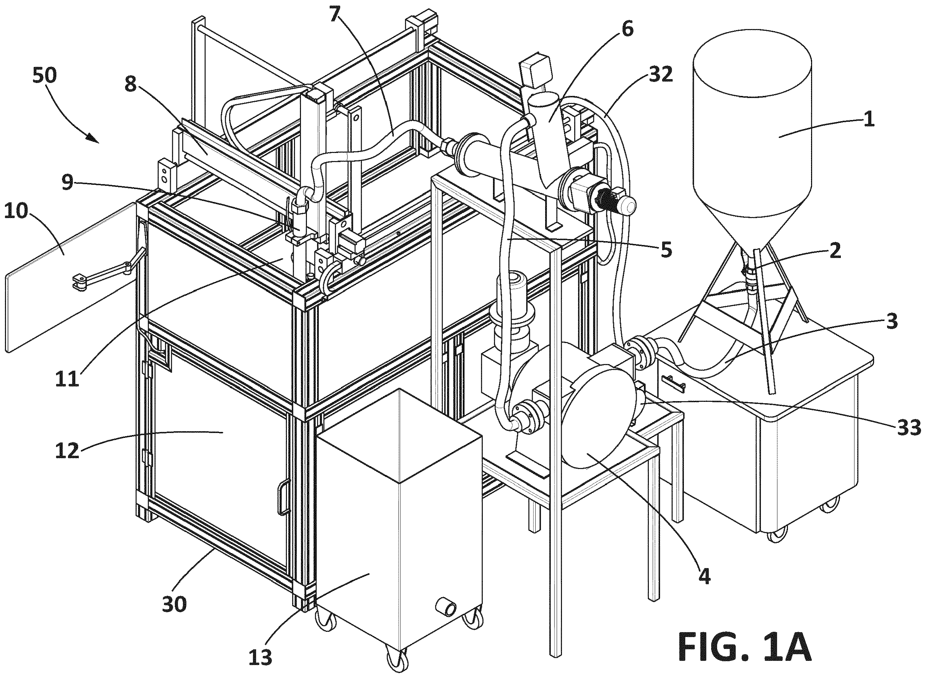

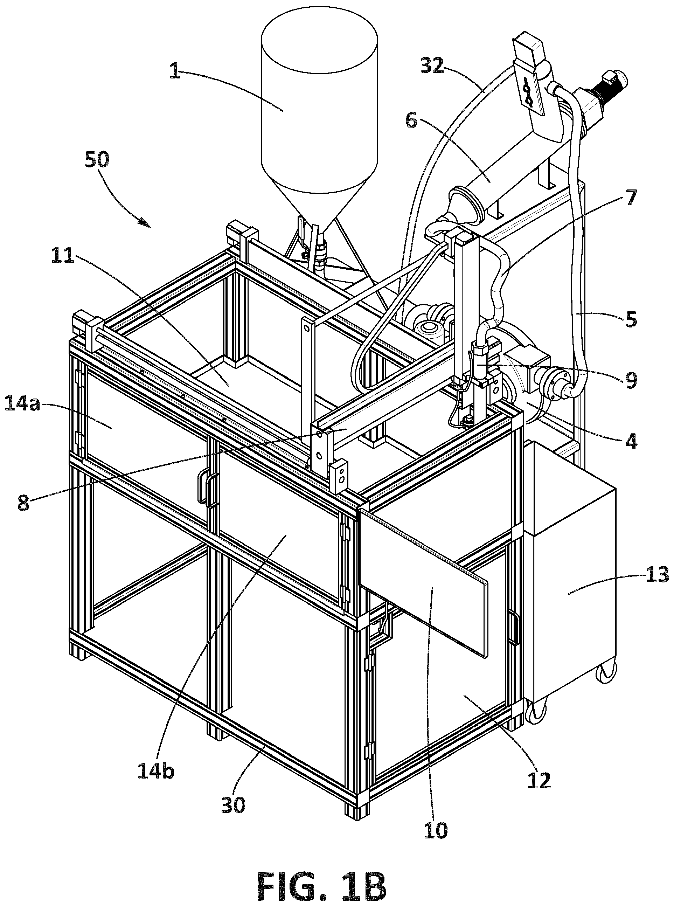

Figure 1A-1B show, from two different perspectives, an apparatus 50 for printing an object or a structure.

The apparatus 50 comprises a hopper 1, a feeding tube 3 coupled to the hopper 1 through a valve 2 for adjusting the amount of cementitious material in the hopper 1 that is to be transferred to the feeding tube 3, a first pump 4 coupled to the feeding tube 3, a first conduit 5 coupled to both the first pump 4 and a printing assembly 6, the printing assembly 6, a second conduit 32 coupled to a vessel of the printing assembly 6 (in some other examples, the second conduit 32 is coupled to the first conduit 5), a deposition conduit 7 and a printing head 9.

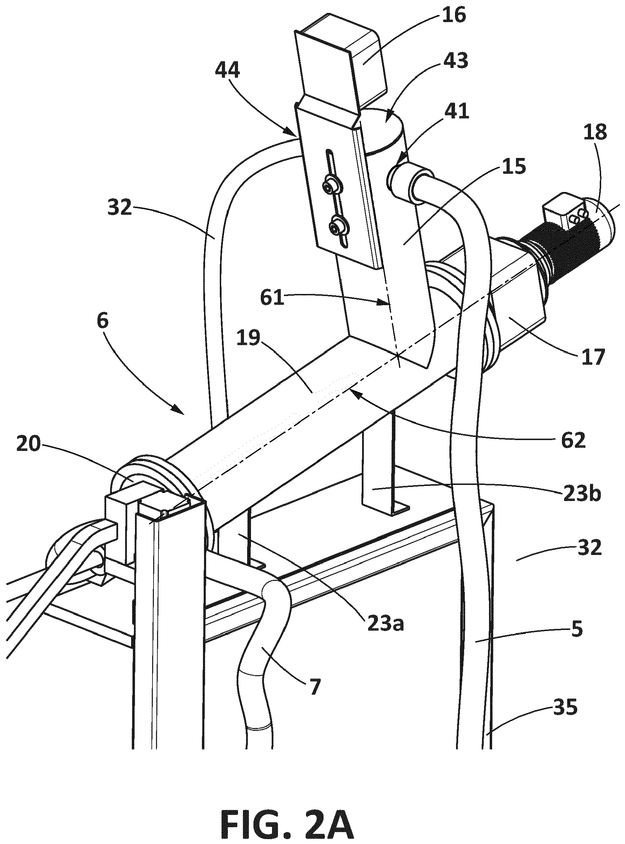

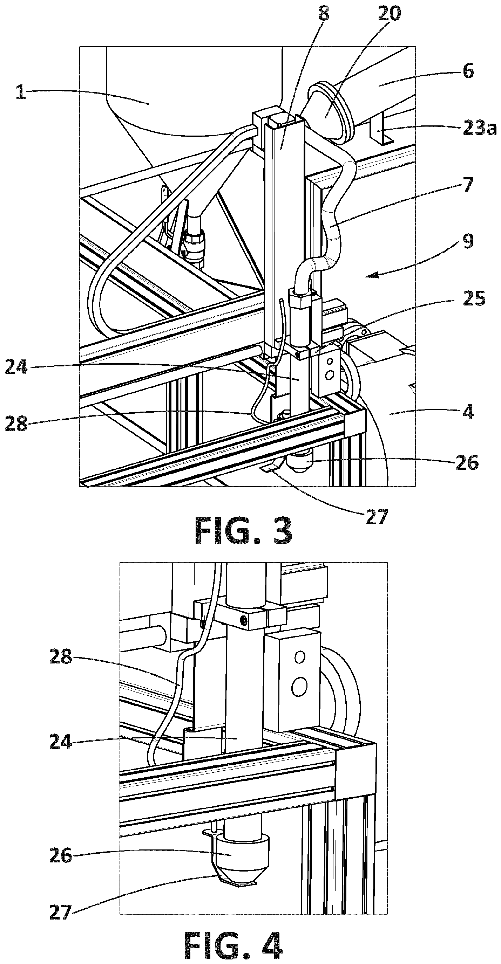

The hopper 1 receives a cementitious material for deposition through a first opening thereof (the opening at the top). The cementitious material is transferred from the hopper 1 to a barrel of the first pump 4 through the feeding tube 3. To this end, the first pump 4 preferably suctions the cementitious material from a second opening (the opening at the bottom) of the hopper 1 so that fewer air bubbles enter into the barrel of the first pump 4. The first pump 4 then pumps the cementitious material in the barrel thereof to the printing assembly 6 via the first conduit 5. Through the second conduit 32 and by means of a pump 33 coupled thereto it may be provided, to the printing assembly 6, at least one of: a fiber reinforcement for cementitious material, a rheology modifier for cementitious material, a hardening accelerant for cementitious material, and a hardening retardant for cementitious material. From the printing assembly 6, the cementitious material is delivered to the printing head 9, via the deposition conduit 7, for deposition of the same as described next with reference to Figures 2A-2B and 3.

In this example, the apparatus 50 further comprises a moveable device 8 comprising a gantry cartesian robot to which the printing head 9 is coupled, a unit 12 programmed to operate the apparatus 50, a framework 30, and a plate 11 onto which the cementitious material is deposited for 3D printing an object. Further, the apparatus 50 comprises a panel 10 for supervision and input by a user, doors 14a-14b for blocking and unblocking the access of a user to the plate 11, and a decanter 13 coupled to a hole in the plate 11 for depositing any excess material in the apparatus 50.

In other examples, the printing head 9 is coupled to a moveable device 8 comprising a scaled gantry crane cartesian robot, or a robotic arm, or a cable driven robot. These manipulators may be used for moving the printing head 9 and, thus, a nozzle for 3D printing an object or a structure.

Figures 2A-2B show a printing assembly 6 of the apparatus 50 from a perspective and a side view, respectively.

The printing assembly 6 comprises a vessel 15, a sensing device 16, a second pump 17, and first and second supporting legs 23a-23b. The vessel 15 comprises a first opening 41, a second opening 42, a third opening 43, and a fourth opening 44; the second opening 42 is at a first end of the vessel 15, particularly a first end in the lengthwise dimension 61 of the vessel 15, and the third opening is at a second of the vessel 15, particularly a second end in the lengthwise dimension 61 of the vessel 15.

The first conduit 5 is coupled to the first opening 41 of the vessel 15, the second pump 17 is coupled to the second opening 42 of the vessel 15, the third opening 43 of the vessel 15 is left unobstructed, and the second conduit 32 is coupled to the fourth opening 44 (in some other examples, the second conduit 32 is coupled to the vessel 15 through the first opening 41 such that both the first and the second conduits 5, 32 are provided side-by-side sharing the third opening 43). Preferably, the first opening 41 is more proximate to the third opening 43 than to the second opening 42 so that the vessel 15 may be filled with cementitious material from a higher position thereof (which will be free from cementitious material when the apparatus 50 deposits the cementitious material within the vessel 15); the fourth opening 44 is also preferably arranged similar to the first opening 41, that is, more proximate to the third opening 43 than to the second opening 42. The sensing device 16 is arranged adjacent to the third opening 43 of the vessel 15 and aimed at the third opening 43 so that it may measure an amount of cementitious material within the vessel 15. To this end, the sensing device 16 is coupled to the vessel 15 by means of a supporting frame attached to the vessel 15.

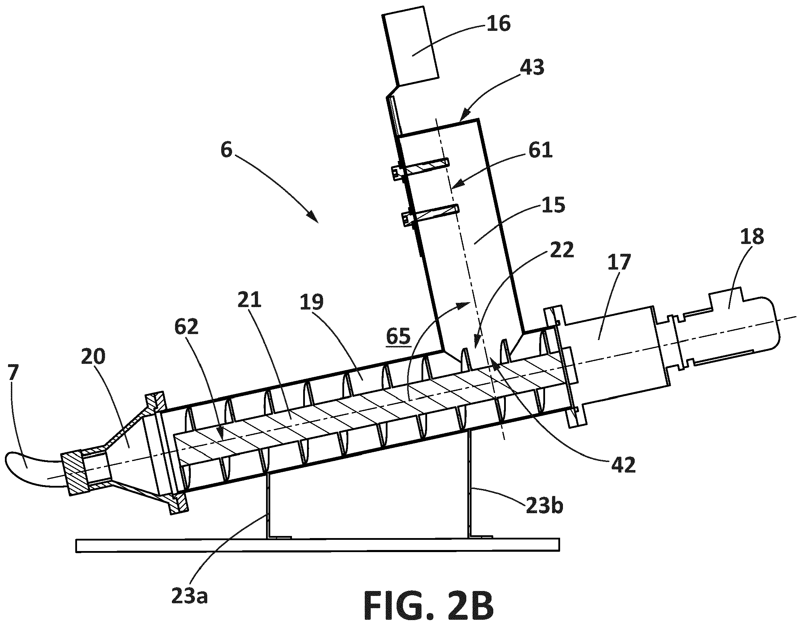

The second pump 17 comprises an engine 18, a barrel 19 (which may be the stator of the second pump 17), a hydraulic screw 21 within the barrel 19, a discharging opening 20 and a charging opening 22. As best seen in Figure 2B, the charging opening 22 of the second pump 17 is coupled to the second opening 42 of the vessel 15 such that the barrel 19 may receive cementitious material from the vessel 15 owing to such coupling. Preferably, an angle 65 formed between the lengthwise dimension 61 of the vessel 15 and the lengthwise dimension of the barrel 19 of the second pump 17 is between 60º and 150º, the angle preferably being measured from the lower-most part of the barrel 19 (that is, the part containing the discharging opening 20). The engine 18 operates the hydraulic screw 21 thereby pushing (towards the discharging opening 20) and mixing the cementitious material present within the barrel 19. In this sense, any substance(s) added to the cementitious material in the vessel 15 or in the first conduit 5 (through the second conduit 32) is mixed with the cementitious material due to the operation of the hydraulic screw 21. The discharging opening 20 is coupled to the deposition conduit 7 so that the cementitious material within the barrel 19 may be provided to the printing head 9 and, thus, to the nozzle. A conic head may be provided at the discharging opening 20 for enhancing the delivery of cementitious material to the deposition conduit 7 by Bernoulli effect.

The second pump 17 may be coupled to a frame 35 (that may be part of the apparatus 50 or not) by means of the first and the second supporting legs 23a-23b. The first supporting leg 23a has a shorter length than the second supporting leg 23b. The first supporting leg 23a is coupled to the second pump 17 closer to the discharging opening 20 than the second supporting leg 23b, which in turn is coupled closer to the charging opening 22 than the first supporting leg 23a. Accordingly, a lengthwise dimension 62 of the second pump 17 has an angle greater than 0º and less than 90º with respect to the horizontal (which in this case coincides with a supporting plane of the frame 35) and, thus, the discharging opening 20 is at a lower height than the charging opening 22. As the cementitious material within the barrel 19 is pushed towards the discharging opening 20, any air bubbles in the cementitious material may move towards the charging opening 22 and, thus, be transferred to the vessel 15.

When the vessel 15 is arranged such that a lengthwise dimension 61 thereof has an angle between 45º and 135º with respect to the horizontal, as shown in Figures 2A-2B, the air bubbles present in the cementitious material within the vessel 15 go upwards and may be released from the material through the third opening 43, which is unobstructed thereby making possible to let out the same. In addition, through the third opening 43, any excess pressure provided by the first pump 4 or the second pump 17 may be released, thereby providing a homogeneous deposition of cementitious material if desired. Further, owing to the vertical arrangement of the vessel 15, the cementitious material therein may fall into the barrel 19 of the second pump 17 without requiring any piston or plunger that pushes the material.

Figure 3 shows the printing head 9 of the apparatus 50.

The printing head 9 comprises a tube 24 that is preferably rigid for easing the printing process, particularly the manipulation of the apparatus 50 for directing the deposition of cementitious material. The tube 24 is coupled to the deposition conduit 7. The tube 24 is also coupled to the gantry cartesian robot (of the moveable device 8) with a clamp fastener 25.

The printing head 9 further comprises a nozzle 26 coupled to the tube 24 with a deposition opening for letting out the cementitious material with which the object or the structure is to be printed.

The printing head 9 also comprises a blocking device 27 with a pneumatic actuator 28. The blocking device 27 may be switched between at least a position in which it does not block the nozzle 26, and another position in which it blocks the nozzle 26, as shown in Figure 4.

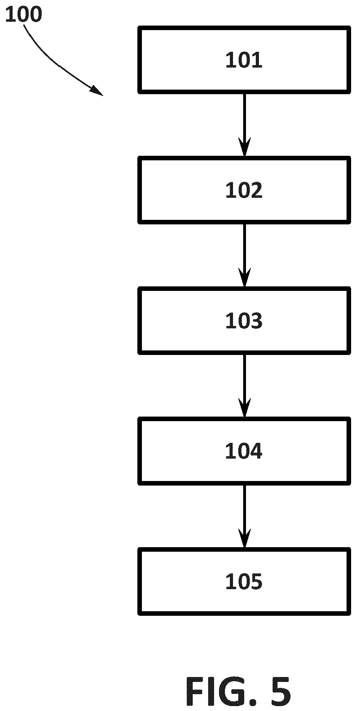

Figure 5 shows, in a block diagram form, a method 100 for printing an object or a structure.

The method 100 comprises:
- A step of pumping 101, with a first pump, a cementitious material. The cementitious material is pumped from a barrel of the first pump to a vessel through a first conduit;
- A step of providing 102, from a second conduit to one of the vessel and the first conduit, at least one of: a fiber reinforcement for cementitious material, a rheology modifier, a hardening accelerant for cementitious material, and a hardening retardant for cementitious material;
- A step of providing 103 the cementitious material within the vessel to a barrel of a second pump;
- A step of pumping 104, with the second pump, the cementitious material. The cementitious material is pumped from the barrel of the second pump to the nozzle, preferably through a conduit coupled to both the barrel and the nozzle; and
- A step of depositing 105 the cementitious material of the vessel with a nozzle, particularly the cementitious material pumped with the second pump.

Even though the terms first, second, third, etc. have been used herein to describe several components or devices, it will be understood that the components or devices should not be limited by these terms since the terms are only used to distinguish one component or device from another. For example, the first pump could as well be named second pump and the second pump could be named first pump without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. An apparatus (50) comprising:
a vessel (15) adapted to contain cementitious material, the vessel (15) at least comprising first, second and third openings (41-43);
a first conduit (5) coupled to the first opening (41) of the vessel (15);
a first pump (4) adapted to deliver cementitious material to the vessel (15) from a first barrel, the first pump (4) being coupled to the first conduit (5) and comprising the first barrel;
a nozzle (26) adapted to deposit cementitious material; and
a second pump (17) adapted to deliver cementitious material to the nozzle (26) from a second barrel (19), the second pump (17) comprising the second barrel (19);
wherein the third opening (43) is unobstructed;
wherein the apparatus (50) further comprises a second conduit (32) coupled to one of the vessel (15) and the first conduit (5), the second conduit (32) being adapted to deliver at least one of: a fiber reinforcement for cementitious material, a rheology modifier for cementitious material, a hardening accelerant for cementitious material, and a hardening retardant for cementitious material;
wherein the second barrel (19) is coupled to the second opening (42) of the vessel (15).

2. The apparatus (50) of claim 1, wherein the second opening (42) is at a first end of the vessel (15) and the third opening (43) is at a second end of the vessel (15), the first end being opposite to the second end.

3. The apparatus (50) of any of the preceding claims, further comprising a sensing device (16) configured to sense an amount of material within the vessel (15), the sensing device (16) being adjacent to the third opening (43) of the vessel (15).

4. The apparatus (50) of claim 3, wherein the sensing device (16) comprises an ultrasonic sensor configured to provide sound waves towards an interior of the vessel (15) through the third opening (43).

5. The apparatus (50) of any of the preceding claims, wherein the first pump (4) is a peristaltic pump or a worm pump.

6. The apparatus (50) of any of the preceding claims, wherein the second pump (17) is a worm pump or an endless screw based pump.

7. The apparatus (50) of any of the preceding claims, further comprising first and second supporting legs (23a, 23b) coupled to the second pump (17), wherein a length of the first supporting leg (23a) is shorter than a length of the second supporting leg (23b).

8. The apparatus (50) of any of the preceding claims, further comprising a hopper (1); wherein the hopper (1) comprises first and second openings; wherein the first opening of the hopper (1) is adapted to receive cementitious material; and wherein the first pump (4) is further adapted to suction cementitious material into the first barrel from the second opening of the hopper (1).

9. The apparatus (50) of any of the preceding claims, further comprising a blocking device (27) configured to switch between a first position and a second position; wherein, in the first position, the blocking device (27) blocks a deposition opening of the nozzle (26); and wherein, in the second position, the blocking device (27) does not block the deposition opening of the nozzle (26).

10. The apparatus (50) of any of the preceding claims, further comprising a third conduit (7), a printing head (9), and a moveable device (8); wherein the printing head (9) comprises the nozzle (26) and is coupled to the moveable device (8); wherein the third conduit (7) is coupled to both the second barrel (19) and the printing head (9); and wherein the moveable device (8) comprises one of: a robotic arm, a gantry crane, and a gantry cartesian robot.

11. A method (100) comprising:
pumping (101), with a first pump (4), a cementitious material to a vessel (15) from a first barrel through a first conduit (5), the vessel (15) being adapted to contain cementitious material and at least comprising first, second and third openings (41-43), the first conduit (5) being coupled to both the first opening (41) of the vessel (15) and the first pump (4), and the first pump (4) comprising the first barrel; and
depositing (105) the cementitious material of the vessel (15) with a nozzle (26);
**characterized in that** the method further comprises:
providing (103) the cementitious material within the vessel (15) to a second barrel (19), wherein a second pump (17) comprises the second barrel (19);
providing (102), from a second conduit (32) to one of the vessel (15) and the first conduit (5), at least one of: a fiber reinforcement for cementitious material, a rheology modifier for cementitious material, a hardening accelerant for cementitious material, and a hardening retardant for cementitious material; and
pumping (104), with the second pump (17), the cementitious material from the second barrel (19) to the nozzle (26);
wherein the third opening (43) is unobstructed.

12. The method of claim 11, further comprising sensing, with a sensing device (16), an amount of material within the vessel (15) through the third opening (43); wherein the step of pumping (101), with the first pump (4), the cementitious material to the vessel (15) through the first conduit (5) comprises:
pumping, with the first pump (4) when a sensed amount of material within the vessel (15) is less than a first threshold, the cementitious material to the vessel (15) from the first barrel through the first conduit (5); and
stopping the pumping with the first pump (4) when the sensed amount of material within the vessel (15) is equal to or greater than a second threshold.

13. The method of any of claims 11-12, further comprising blocking the nozzle (26) thereby stopping deposition of the cementitious material.

14. The method of claim 13, further comprising, when the nozzle (26) is blocked, awaiting hardening of deposited cementitious material or displacing the nozzle (26) to a first location different from a second location where cementitious material has been deposited with the nozzle (26); and unblocking the nozzle (26) thereby further depositing the cementitious material.

15. The method of any of claims 11-14, further comprising moving a moveable device (8); wherein a printing head (9) comprises the nozzle (26) and is coupled to the moveable device (8); wherein a third conduit (7) is coupled to both the second barrel (19) and the printing head (9); and wherein the moveable device (8) comprises one of: a robotic arm, a gantry crane, and a gantry cartesian robot.
